# EUROPEAN PATENT APPLICATION

(11) **EP 3 565 031 A1**
(43) Date of publication of application: **06.11.2019**
(21) Application number: 17887321.2
(22) Date of filing: 16.11.2017
(51) Int. Cl.: H01M 4/13, H01M 4/62

(54) **ELECTRODE FOR LITHIUM ION SECONDARY BATTERIES, AND LITHIUM ION SECONDARY BATTERY**

(30) Priority: 27.12.2016 JP 2016252258
(71) Applicant: Hitachi, Ltd., Tokyo 100-8280 (JP)
(72) Inventor: NISHIMURA Etsuko, Tokyo 100-8280 (JP); ABE Makoto, Tokyo 100-8280 (JP); NOIE Akihiko, Tokyo 100-8280 (JP); KAGA Yusuke, Tokyo 100-8280 (JP); NAOE Kazuaki, Tokyo 100-8280 (JP); AMASAKI Shimpei, Tokyo 100-8280 (JP)
(74) Representative: MERH-IP Matias Erny Reichl Hoffmann Patentanwälte PartG mbB
(86) International application number: PCT/JP2017/041205
(87) International publication number: WO 2018/123324

(57) **Abstract**

Exudation of an electrolytic solution from an electrode is to be prevented. An electrode for a lithium-ion secondary battery including an electrode active material and a semi-solid electrolyte, in which the semi-solid electrolyte includes an organic solvent or an ionic liquid, and a lithium salt, the electrode for the lithium-ion secondary battery includes a nanofiber, in which the nanofiber is cellulose-based or polyacrylate-based resin; the nanofiber has a wire diameter of 0.01 µm or more and 1 µm or less; and the average value of the pore diameter of an electrode mixture layer removing the ionic liquid and the lithium salt from the electrode for the lithium-ion secondary battery measured by a mercury porosimeter is 0.001 µm or more and 0.5 µm or less.

## Description

### Technical Field

The present invention relates to an electrode for a lithium-ion secondary battery and a lithium-ion secondary battery.

### Background Art

Lithium-ion secondary batteries have high energy density, and are attracting attention as batteries for electric vehicles and power storage. In particular, in the electric vehicle, there are zero emission electric vehicles not equipped with an engine (a battery-type electric vehicle or battery electric vehicle (hereinafter referred to as BEV.)), hybrid electric vehicles equipped with both an engine and a secondary battery, and even plug-in electric vehicles charged from a system power supply. In particular, in the BEV, a high energy density storage battery is required so as to increase one charge travel distance. However, in the lithium-ion secondary battery of the related art, it is necessary to add a cooling mechanism for the battery, and the problem is that the energy density is reduced in an entire battery system. If the heat resistance of the lithium-ion secondary battery is improved and the cooling mechanism can be omitted, the above-described problem can be solved.

In order to improve the heat resistance of the lithium-ion secondary battery, it is necessary to improve an organic electrolytic solution used in the lithium-ion secondary battery of the related art. One of the solutions is a method of changing the organic electrolytic solution to an electrolyte that has excellent heat resistance, and the electrolyte is a liquid in which a lithium salt is dissolved in an ionic liquid.

As a related art related to this, Patent Literature 1 discloses an electrode active material layer for rechargeable batteries with non-aqueous electrolytes, which includes a fibrous resin skeleton base material and an active material, and the active material is dispersed in the pores of the fibrous resin skeleton base material. Patent Literature 2 discloses rechargeable batteries with non-aqueous electrolytes including a cathode that contains a cathode active material, an anode that contains an anode active material, and a non-aqueous electrolyte, in which at least one of the cathode and the anode contains cellulose fibers, and at least a part of the cellulose fiber has a thickness of 0.01 µm to 50 µm and the ratio of the length L to the thickness T (L/T) is 5 times or more.

### Prior Art Literature

### Patent Literature

PTL 1: WO15/53199
PTL 2: JP-A-2002-260663

### Summary of Invention

### Technical Problem

Generally, even when an organic electrolytic solution is absorbed by an electrode or a porous separator, the electrolytic solution exudes due to a small pressure. Also in any of the related art, the retention property of electrolytic solution is not enough, and the electrolytic solution exudes from the electrode. An object of the invention is to prevent exudation of the electrolytic solution from an electrode.

### Solution to Problem

The features of the invention for solving the above problems are as follows, for example.

An electrode for a lithium-ion secondary battery including an electrode active material and a semi-solid electrolyte, in which the semi-solid electrolyte includes an organic solvent or an ionic liquid, and a lithium salt, the electrode for the lithium-ion secondary battery includes a nanofiber, in which the nanofiber is cellulose-based or polyacrylate-based resin; the nanofiber has a wire diameter of 0.01 µm or more and 1 µm or less; and an average value of a pore diameter of an electrode mixture layer obtained by removing the ionic liquid and the lithium salt from the electrode for the lithium-ion secondary battery measured by a mercury porosimeter is 0.001 µm or more and 0.5 µm or less

### Advantageous Effect

The invention is to prevent exudation of the electrolytic solution from an electrode. Other problems, configurations, and effects will become apparent from the following description of the embodiments.

### Brief Description of Drawings

[FIG. 1] FIG. 1 shows a cross-sectional structure of a lithium-ion secondary battery of the invention.
[FIG. 2] FIG. 2 shows the results of Examples and Comparative Examples of the invention.
[FIG. 3] FIG. 3 shows the results of the Examples and the Comparative Examples of the invention.

### Description of Embodiments

Embodiments of the invention will be described below with reference to the drawings. The following description shows specific examples of the contents of the invention, and the invention is not limited to these descriptions, and various changes and modifications can be made by those skilled in the art within the scope of the technical idea disclosed in the description. In addition, in all the drawings for explaining the invention, those having the same function are denoted by the same reference numerals, and the repeated description thereof may be omitted.

### Example

### [Configuration of Battery of Invention]

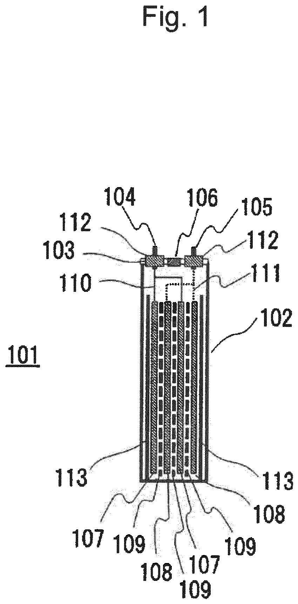

FIG. 1 schematically shows an internal structure of a lithium-ion secondary battery 101. The lithium-ion secondary battery 101 is an electrochemical device that can store or utilize electrical energy by occluding and releasing lithium-ions to and from an electrode in non-aqueous electrolytes. This is also referred to as another name of a lithium-ion battery, a rechargeable battery with non-aqueous electrolyte, and a rechargeable battery with non-aqueous electrolytic solution, but any battery is the object of the invention.

The lithium-ion secondary battery 101 has a configuration in which an electrode group including a cathode 107, an anode 108, and a semi-solid electrolyte layer 109 is enclosed in a battery container 102 in a sealed state. The semi-solid electrolyte layer 109 is formed at least on a surface of the cathode 107 or the anode 108, and has an integral structure. The semi-solid electrolyte layer 109 electrically insulates the cathode 107 and the anode 108, and has a function of allowing lithium-ions to permeate by retaining an electrolytic solution L described later. As the electrode group, various configurations such as a configuration in which a strip-shaped electrode is stacked and a configuration in which a band-shaped electrode is wound to form a cylindrical shape or a flat shape can be adopted. In the case where a semi-solid electrolyte is retained in the pores of the cathode 107 and the anode 108, when the electrolytic solution L leaks from the pores, the region in which the electrolytic solution L is insufficient occurs in a part of the cathode 107 or the anode 108. As a result, the performance of the lithium-ion secondary battery 101 may be reduced.

The semi-solid electrolyte layer 109 is a sheet-shaped material in which the lithium salt is dissolved in the organic solvent or the ionic liquid and mixed with an oxide such as SiO₂, Al₂O₃, AlOOH, TiO₂, ZrO₂, BaTiO₃, CaO, MgO, Li₇La₃Zr₂O₁₂. This is featured in that there is no fluid electrolytic solution and the electrolytic solution is difficult to leak out. The semi-solid electrolyte layer 109 serves as a medium for transferring lithium-ions between the cathode 107 and the anode 108, and it also works as an insulator of electrons and prevents the short circuit between the cathode 107 and the anode 108. In the invention, the ionic liquid is a compound which dissociates into a cation and an anion at room temperature, and retains the liquid state. The ionic liquid is sometimes referred to as a liquid of ionic, a low melting point molten salt, or a room temperature molten salt.

The electrolytic solution L is a solution in which the lithium salt is dissolved in the organic solvent or the ionic liquid used for the semi-solid electrolyte layer 109. The liquid is absorbed into the pores of the electrode of the invention. Same as the semi-solid electrolyte layer 109, it is a feature of the invention that the electrolytic solution is difficult to leak out of the electrode. The electrolytic solution L may be previously contained in the semi-solid electrolyte layer 109, or the electrolytic solution may be added after a sheet containing no electrolyte is sandwiched between the cathode 107 and the anode 108 and the electrode group is assembled. When the electrolytic solution is added, the electrolyte solution is supplied from a liquid injection port 106 to the electrode group, which will be described later.

The battery container 102 can be selected in any shape, such as a cylindrical shape, a flat oval shape, or a square shape, corresponding to the shape of the electrode group. In the battery container 102, after the electrode group is accommodated from an opening provided in an upper portion, the opening portion is closed by a lid 103 and sealed.

An outer edge of the lid 103 is bonded to the opening of the battery container 102 by, for example, welding, swaging, and bonding, over the entire circumference, which seals the battery container 102 in a sealed state. The lid 103 includs a liquid injection port in which the electrolyte L is injected into the battery container 102 after sealing the opening of the battery container 102. After the electrolytic solution L is injected into the battery container 102, the liquid injection port is sealed by the liquid injection port 106. It is also possible to provide the injection port 106 with a safety mechanism. As the safety mechanism, a pressure valve which releases the pressure inside the battery container 102 may be provided.

A cathode external terminal 104 and an anode external terminal 105 are fixed to the lid 103 via an insulating seal material 112, and a short circuit between the cathode external terminal 104 and the anode external terminal 105 is prevented by the insulating seal material 112. The cathode external terminal 104 is connected to the cathode 107 via a cathode lead wire 110, and the anode external terminal 105 is connected to the anode 108 via an anode lead wire 111. The material of the insulating seal material 112 can be selected from a fluorine resin, a thermosetting resin, a glass hermetic seal and the like, and any insulating material that does not react with the electrolytic solution L and has excellent airtightness can be used.

An insulating sheet 113 is also inserted between the electrode group and the battery container 102, so that the cathode 107 and the anode 108 are prevented from the short circuit through the battery container 102.

### [Manufacture of Cathode]

The cathode 107 includes a cathode active material (electrode active material), a conductive material, a binder, and a current collector. When the cathode active material is exemplified, LiCoO₂, LiNiO₂, and LiMn₂O₄ are representative examples. Also, LiMnO₃, LiMn₂O₃, LiMnO₂, Li₄Mn₅O₁₂, LiMn₂₋ₓMₓO₂ (where M=Co, Ni, Fe, Cr, Zn, Ta, and x=0.01 to 0.2), Li₂Mn₃MO₈ (where M=Fe, Co, Ni, Cu, and Zn), Li₁₋ₓAxMn₂O₄ (where A=Mg, B, Al, Fe, Co, Ni, Cr, Zn, Ca, and x=0.01 to 0.1), LiNi₁₋ₓMxO₂ (where M=Co, Fe, Ga, and x=0.01 to 0.2), LiFeO₂, Fe₂(SO₄), LiCo₁₋ₓMₓO₂ (where M=Ni, Fe, Mn, and x=0.01 to 0.2), LiNi₁₋ₓMₓO₂ (where M=Mn, Fe, Co, Al, Ga, Ca, Mg, and x=0.01 to 0.2), Fe(MoO₄)₃, FeF₃, LiFePO₄, and LiMnPO₄ can be listed. In the present Example, LiNi_{1/3}Mn_{1/3}Co_{1/3}O₂ was selected as the cathode active material. However, the invention is not limited to these materials since it is not restricted by the cathode material. In the present Example, although LiNi_{1/3}Co_{1/3}Mn_{1/3}O₂ is used as the cathode active material, it is also possible to use a higher capacity Li₂MnO₃-LiMnO₂-based solid solution ctathode, and to use a high power 5 V-based cathode (such as LiNi_{0.5}Mn_{1.5}O₄). When these high-capacity materials or high power materials are used, the thickness of the above mixture can be reduced, and the electrode area that can be enclosed in the battery can be increased. As a result, at the same time when the resistance of the battery is reduced to enable the high output, the capacity of the battery can be increased more than when the cathode of LiNi_{1/3}Co_{1/3}Mn_{1/3}O₂ is used.

First, powder of secondary particles (those by granulating primary particles) of the cathode active material is collected. However, as in lithium iron phosphate, powder of the primary particles may be used without granulation. The presence or absence of granulation and the difference between the primary particles and the secondary particles are not important in the invention.

The particle diameter of the cathode active material is specified to be equal to or less than the thickness of a cathode layer (electrode mixture layer). When there are coarse particles having the size equal to or larger than the thickness of the cathode layer in powder for the cathode active material, the coarse particles are previously removed by sieve classification or air classification to prepare particles having the thickness equal to or less than the thickness of the cathode layer.

First, the cathode active material may be used as the primary particles that are not granulated, or may be granulated to use secondary particles. In the present Example, a method for producing the cathode will be described assuming that the secondary particles are used. The average particle diameter (D₅₀) of the cathode active material of the invention was measured by a laser scattering method. The average particle diameter D₅₀ is measured by suspending a sample of the cathode active material in water and by using a laser scattering particle diameter measuring device (for example, microtrack). D₅₀ is defined as the particle diameter when the ratio (volume fraction) of the entire sample to the volume is 50%. As long as the range is 2 µm to 20 µm, it is applicable to the invention. In particular, when D₅₀ is 2 µm to 10 µm, it is possible to provide a well-balanced cathode that prevents the deterioration of the caulking property of the cathode active material accompanying the particle diameter reduction, and enhances the electrolyte retention capacity.

The cathode active material is used to prepare a cathode slurry, which is applied to the current collector to produce a cathode.

The cathode slurry is prepared by mixing binders and nanofibers of the invention in the cathode active material, and further adding a solvent such as water or 1-methyl-2-pyrrolidone. The nanofiber is made of a cellulose-based or polyacrylate-based resin. These resins are materials that do not have a hydroxyl group. When there is a hydroxyl group, it reacts with the electrolyte, so that the electrical conductivity of the lithium-ions is reduced. In addition, since the resin has polarity, and contains a large amount of oxygen atoms that easily coordinate to lithium-ions, the electrolyte is easily wetted by the resin. As a result, the retention amount of electrolyte by the nanofibers is increased.

The wire diameter of the nanofiber is suitably 0.01 µm or more and 0.1 µm or less. When the fiber diameter of the nanofiber is not small, it is not possible to enter the gaps between the particles of the cathode active material. When the wire diameter is larger than 0.1 µm, for example, 0.5 µm, the gaps between the particles of the cathode active material are closed to inhibit the diffusion of lithium-ions. Still further, when the nanofibers intrude between the particles of the cathode active material, the electronic conductivity between the particles of the active material is deteriorated due to the high electrical resistance of the nanofibers. On the contrary, when the wire diameter of the nanofiber is smaller than 0.01 µm, the relative surface area of the nanofiber is increased, so that the viscosity of the cathode slurry is increased, which makes it difficult to apply the cathode. As a result, the surface of the cathode is likely to be uneven, and the performance and life of the battery are deteriorated. Therefore, the length of the nanofiber is suitably 0.1 µm or more and 50 µm or less. If it is 0.1 µm or more and 10 µm or less, the density of the cathode 107 is increased, which is particularly effective for the capacity of the battery. After the cathode slurry is applied to the current collector, the solvent of the cathode slurry is dried, and if necessary, when the cathode is compression molded, the cathode 107 is completed. The pore diameter of the cathode layer before adding the electrolyte of the invention is measured using a mercury porosimeter. The appropriate average pore diameter is 0.001 µm or more and 0.5 µm or less. Since the pore diameter is small, in addition to the retention power of the nanofibers, it is suitable to increase the retention power of the electrolyte by capillary force.

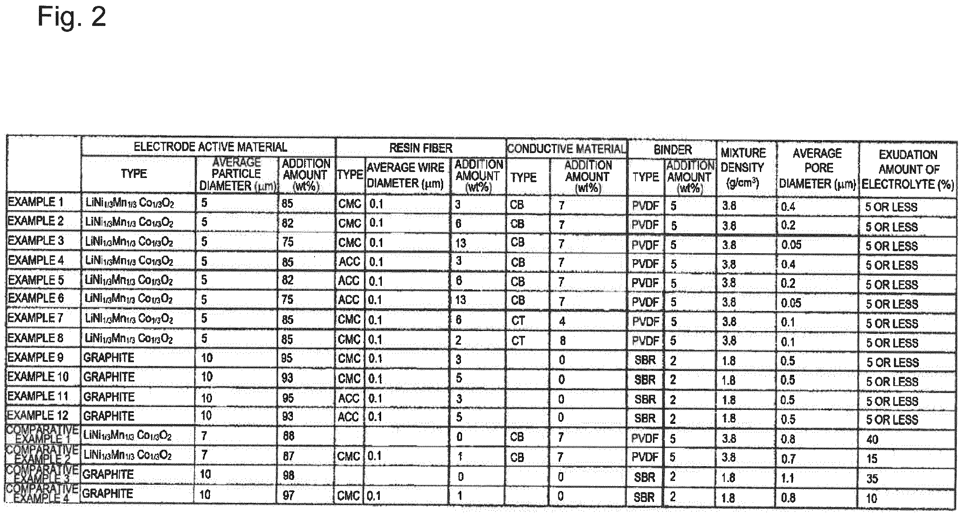

The pore diameter in the cathode layer is the pore diameter of the pore removing the electrolyte and its solvent, that is, the pore diameter of the space removing the cathode active material, the conductive material, and the binder. It can be measured by the following means. First, the component of an electrolyte solvent such as tetraglyme is eluted using a low viscosity organic solvent or water. Any solvent can be used as long as it can dissolve the electrolyte and the solvent without dissolving the binder and the nanofibers. When the cathode is immersed in an alcohol such as methanol or ethanol, dimethyl ether, acetone, dimethoxyether or water, the electrolyte solvent is eluted from the cathode. After the elution of the electrolyte solvent is repeated several times, taking out the cathode and drying it in vacuum, so that the low viscosity organic solvent or water is removed, and the electrolyte solvent is removed from the pores of the cathode. The pore diameter is measured using the mercury porosimeter. In the description, the median diameter is taken as the average pore diameter. The measurement results are shown in the column of average pore diameter in FIG. 2.

The cathode active material of the present Example is LiNi_{1/3}Co_{1/3}Mn_{1/3}O₂, and the average particle diameter and the addition amount in the cathode are shown in the column of the electrode active material of FIG. 2.

In order to prepare the cathode 107, it is necessary to prepare a cathode slurry. A type and a weight composition of a resin fiber (nanofiber), the conductive material, and the binder are shown in FIG. 2. The types of nanofibers shown in FIG. 2 are indicated by symbols, CMC means carboxymethyl cellulose, and ACC means cellulose acetate. The conductive material is acetylene black or carbon nanotube, and is denoted as CB or CNT in FIG. 2. Polyvinylidene fluoride (PVDF) was used as the binder. It changes according to the type of material, the relative surface area, and the particle diameter distribution, and is not limited to the exemplified composition.

Although the cathode active material requires the conductive material because of its high resistance, it is also possible to replace a part of it with carbon fiber. Since the carbon fibers connect the particles of the cathode active material, the electronic resistance is easily reduced. When mixed with nanofibers, the two become entangled with each other, making it easier to increase the electrolytic solution retention amount of the nanofibers. The addition of carbon fibers increases both the conductivity and the electrolytic solution retention amount. As the carbon fiber, any material such as carbon nanotube, vapor grown carbon, and carbonized carbon fiber of polyacrylonitrile fiber can be used.

The wire diameter of the carbon fiber is 0.001 µm or more and 1 µm or less, and the length can be used in the invention as long as it is 0.1 µm or more and 10 µm or less. When the wire diameter of the carbon fiber is 0.01 µm or more and 0.1 µm or less, the nanofibers are entangled, which is particularly effective in increasing the electrolytic solution retention amount.

The weight composition of the carbon fiber can be applied to the invention as long as it is 1 wt% or more and 90 wt% or less with respect to the weight of the nanofiber and the carbon fiber. In particular, when it is 10 wt% or more and 30 wt% or less, the electronic resistance of the cathode can be reduced without deteriorating the affinity between the nanofiber and the electrolytic solution, that is, without reducing the electrolytic solution retention amount.

The solvent used to prepare the slurry may be any solvent that dissolves the binder. 1-methyl-2-pyrrolidone is used for PVDF. The solvent is selected according to the type of the binder. A known mixer and homogenizer are used for the dispersion treatment of the cathode material.

After the cathode slurry in which the cathode active material, the conductive material, the binder, and the organic solvent are mixed is attached to the current collector by the doctor blade method, the dipping method, and the spray method, the organic solvent is dried, and the cathode is pressure-formed by a roll press, so that the cathode can be prepared. It is also possible to stack a plurality of cathode layers on the current collector by repeating the process from application to drying a plurality of times.

The mixture density of the cathode layer is 2 g/cm³ to 3 g/cm³ or more, and it is necessary to bring the conductive material into close contact with the cathode active material to reduce the electronic resistance of the cathode layer.

As the current collector, an aluminum foil having the thickness of 10 µm to 100 µm, or an aluminum punched foil having the thickness of 10 µm to 100 µm and having a pore with the pore diameter of 0.1 mm to 10 mm, an expanded metal, and a foam metal plate are used. Other than aluminum, the materials of stainless steel and titanium are also applicable. In the invention, any material can be used for the current collector without being limited to materials, shapes, and manufacturing methods, as long as it does not change dissolution, oxidation and the like during use of the battery.

The thickness of the cathode layer is preferably equal to or more than the average particle diameter of the cathode active material. This is because when thickness is to be the average particle diameter, the electronic conductivity between adjacent particles is deteriorated. The average particle diameter (D₅₀) of the cathode active material of the invention is measured by the laser scattering method, and the range is 2 µm to 20 µm, in particular, the range of 2 µm to 8 µm is suitable. When the cathode active material is used and the thickness of the cathode layer is 20 µm or more, the effect of the invention can be obtained. The upper limit of the thickness of the cathode layer is preferably 80 µm. This is because when the cathode layer has a thickness of 80 µm or more, and as long as a large amount of the conductive material is not added to the cathode layer, the charge levels of the cathode active material on the surface of the cathode layer and in the vicinity of the surface of the current collector vary, and uneven charge and discharge occur. As the amount of conductive material is increased, the cathode volume becomes bulky and the energy density of the battery is reduced.

### [Manufacture of Anode]

The anode 108 is composed of an anode active material (electrode active material), a binder, and a current collector. The anode active material is natural graphite coated with amorphous carbon.

As a method of forming amorphous carbon on the surface of the natural graphite, there is a method of depositing pyrolytic carbon on the anode active material powder. By diluting low molecular hydrocarbon such as ethane, propane and butane with inert gas such as argon and heating to 800°C to 1200°C, hydrogen is desorbed from hydrocarbon on the surface of particles of the anode active material, and carbon is deposited on the surface of particles of the anode active material. Carbon is in an amorphous form. Otherwise, after adding an organic substance such as polyvinyl alcohol and sucrose, by performing heat treatment at 300°C to 1000°C in an inert gas atmosphere, hydrogen and oxygen can be desorbed in the form of hydrogen, carbon monoxide, and carbon dioxide, and only carbon can be deposited on the surface of the anode active material.

In the present Example, a mixed gas of 1% propane and 99% argon is brought into contact with the anode active material at 1000°C to deposit carbon. The carbon deposition amount is preferably in the range of 1 wt% to 30 wt%. In the present Example, 2 wt% of carbon was deposited on the surface of the anode active material. The carbon coating is effective not only to increase a first cycle discharge capacity but also to increase cycle life performance and rate characteristics.

The average particle diameter (D₅₀) of the anode active material of the invention is measured by the laser scattering method. The average particle diameter D₅₀ is measured by suspending a sample of the anode active material in water and by using a laser scattering particle diameter measuring device (for example, microtrack). D₅₀ is defined as the particle diameter when the ratio (volume fraction) of the entire sample to the volume is 50%. As long as the range is 2 µm to 20 µm, it is applicable to the invention. In particular, when D₅₀ is 5 µm to 20 µm, it is possible to provide a well-balanced anode that prevents the increase in irreversible capacity accompanying the particle diameter reduction, and enhances the electrolyte retention capacity.

The anode active material is used to prepare an anode slurry, which is applied to the current collector to produce an anode.

The anode slurry is prepared by mixing binders and nanofibers of the invention in the anode active material, and further adding a solvent such as water or 1-methyl-2-pyrrolidone. The nanofiber is made of a cellulose-based or polyacrylate-based resin. In these resins, the electrolyte is easily wetted, and the retention power of the electrolyte is strong. The wire diameter of the nanofiber is suitably 0.01 µm or more and 0.1 µm or less. When the fiber diameter of the nanofiber is not small, it is not possible to enter the gaps between the particles of the anode active material. When the wire diameter is larger than 0.1 µm, for example, 0.5 µm, the gaps between the particles of the anode active material are closed to inhibit the diffusion of lithium-ions. When the nanofibers intrude between the particles of the anode active material, the transfer of the electrons and the lithium-ions between particles is deteriorated. On the contrary, when the wire diameter of the nanofiber is smaller than 0.01 µm, the relative surface area of the nanofiber is increased, so that the viscosity of the anode slurry is increased, the surface of the anode is likely to be uneven, which makes it difficult to apply the anode. The length of the nanofiber is suitably 0.1 µm or more and 50 µm or less. If it is 0.1 µm or more and 10 µm or less, the density of the anode is increased, which is particularly effective for the capacity of the battery.

Similar to the cathode, carbon fibers may be added to the anode. It is possible to increase the electrolytic solution retention amount of the anode while further reducing the resistance of the anode. The type and the addition condition of the applicable carbon fiber are similar to those in the case of the cathode.

After the anode slurry is applied to the current collector, the solvent of the anode slurry is dried, and if necessary, when the anode is compression molded, the anode is completed. The pore diameter of the anode layer (electrode mixture layer) before adding the electrolyte of the invention is measured using the mercury porosimeter. The appropriate average pore diameter is 0.001 µm or more and 0.5 µm or less. Since the pore diameter is small, in addition to the retention power of the nanofibers, the retention power of the electrolyte by capillary force is increased.

The pore diameter in the anode layer is the pore diameter of the pore removing the electrolyte and its solvent, that is, the pore diameter of the space removing the anode active material, the conductive material, and the binder. It can be measured by the following means. First, the component of the electrolyte solvent such as tetraglyme is eluted using the low viscosity organic solvent or water. When the anode is immersed in an alcohol such as methanol or ethanol, dimethyl ether, acetone, dimethoxyether or water, the electrolyte solvent is eluted from the anode. After the elution of the electrolyte solvent is repeated several times, taking out the anode and drying it in vacuum, so that the low viscosity organic solvent or water is removed, and the electrolyte solvent is removed from the pores of the anode. The pore diameter of the obtained pore diameter is measured using the mercury porosimeter. In the description, the median diameter is taken as the average pore diameter. The measurement results are shown in the column of average pore diameter in FIG. 2.

In order to prepare the anode 108, it is necessary to prepare an anode slurry. Weight compositions of anode active materials, resin fibers (nanofibers), conductive materials, and binders are shown in FIG. 2. In FIG. 2, an example in which the electrode active material is described as graphite is the Example relating to the anode. Examples 9, 10, 11, and 12 are Examples of the anode of the invention. The conductive agent is acetylene black or carbon nanotube, and is abbreviated as CB or CNT in FIG. 2. Styrene-butadiene rubber (SBR) was used as the binder. The polyvinylidene fluoride (PVDF) used for the cathode of FIG. 2 may be used. It changes according to the type of material, the relative surface area, and the particle diameter distribution, and is not limited to the exemplified composition.

Similar to the cathode 107, other conductive materials such as acetylene black may be mixed. Instead of PVDF, binders of styrene-butadiene rubber and carboxymethyl cellulose may be replaced to prepare an aqueous slurry. Besides, fluorine rubber, ethylene-propylene rubber, polyacrylic acid, polyimide, and polyamide can be used, and there is no restriction in the invention. As long as the binder does not decompose on the surface of the anode and does not dissolve in the electrolytic solution, it can be used in the invention.

The solvent used to prepare the anode slurry may be any solvent that dissolves the binder. 1-methyl-2-pyrrolidone is used for PVDF. The solvent is selected according to the type of the binder. For example, when the binders of styrene-butadiene rubber and carboxymethyl cellulose are used, water is used as the solvent. A known mixer and homogenizer are used for the dispersion treatment of the anode material.

The known techniques such as the doctor blade method, the dipping method, and the spray method are applicable to the application of an anode active material layer. It is also possible to form a multilayer mixture layer on the current collector by performing the process from application to drying a plurality of times. In the present Example, one application is performed on the copper foil by the doctor blade method.

The thickness of the anode layer is preferably equal to or more than the average particle diameter of the anode active material. This is because when thickness is to be the average particle diameter of the anode active material, the electronic conductivity between adjacent particles is deteriorated. When the thickness of the anode layer is 10 µm or more, more suitably 15 µm or more, the effect of the invention can be obtained. The upper limit of the thickness of the anode layer is preferably 50 µm. This is because when the thickness is further increased, and as long as a large amount of the conductive material is not added to the anode layer, the charge levels of the anode active material on the surface of the anode layer and in the vicinity of the surface of the current collector vary, and uneven charge and discharge occur. As the amount of conductive material is increased, the anode volume becomes bulky and the energy density of the battery is reduced.

Although graphite is used as the active material in the present Example, silicon, tin or a compound thereof (oxide, nitride, and an alloy with another metal) may be used as the anode active material. These active materials are larger than the theoretical capacity of graphite (372 Ah/kg), and a capacity of 500 Ah/kg to 1500 Ah/kg can be obtained. When these high-capacity materials are used, the thickness of the above mixture can be reduced, and the electrode area that can be enclosed in the battery can be increased. As a result, at the same time when the resistance of the battery is reduced to enable the high output, the capacity of the battery can be increased more than when the anode of graphite is used.

As the current collector usable in the invention, a copper foil having the thickness of 10 µm to 100 µm, a copper punched foil having the thickness of 10 µm to 100 µm and having a pore diameter of 0.1 mm to 10 mm, an expanded metal, and a foamed metal plate are used. Other than copper, the materials of stainless steel, titanium, and nickel are also applicable. In the invention, any current collector can be used without being limited to materials, shapes, and manufacturing methods. In the present Example and the Comparative Example, a rolled copper foil with a thickness of 10 µm is used.

### [Caulking of Electrolyte into Cathode and Anode]

In order to caulk the pores of the cathode 107 or the anode 108 with the electrolyte, by adding the electrolyte to the cathode or the anode described above and absorbing the electrolyte in the pores of the electrode, the electrolyte can be retained. In another method, a slurry in which the electrolyte, the active material, and the binder are mixed may be prepared, and the electrodes may be applied together on the current collector.

As the electrolyte, a glyme shown in Formula 1 is used as an organic solvent. The glyme has ethylene glycol dimethyl ether as a basic unit, and is called monoglyme, diglyme, triglyme, tetraglyme, pentaglyme, and hexaglyme in the descending order of the number of repetitions. An imide salt can be used as the electrolyte, and Li(NSO₂F)₂ (abbreviated as LiFSI) or LiN(SO₂CF₃)₂ (abbreviated as LiTFSI), LiC₄BO₈ (lithium bis oxalate borate), CF₃SO₃Li (lithium trifluoromethane sulfonate), LiBF₄ (lithium borofluoride) are exemplified as representive examples thereof. The concentration of the electrolyte is suitably 1 mol or more and 3 mol or less with respect to 1 liter of glyme.

CH₃O-(CH₂CH₂O)ₙ-CH₃, (Formula 1)

where n = 1, 2

In addition to the above imide salt, the known lithium-ion electrolytes such as LiPF₆ and LiBF₄ may be mixed.

Further, the glyme of Formula 1 may be changed to another solvent (ionic liquid). As a solvent, 1-ethyl-3-methylimidazolium bis(trifluoromethylsulfonyl)imide(EMI-BTI), 1-ethyl-3-methylimidazolium trifluoromethanesulfonate (EMI-TMS), 1-butyl-1-methylpyrrolidinium bis(trifluoromethylsulfonyl)imide (BMP-BTI), 1-hexyl-3-methylimidazolium hexafluorophosphate (HMI-HFP), 1-ethyl-3-methylimidazolium dicyanamide (EMIDCA), and 11-methyl-3-octylimidazolium tetrafluoroborate (MOI-TFB) are exemplified. The addition of an electrolyte such as LiFSI or LiTFSI to these liquids is suitable because a higher electrical conductivity can be obtained than when using glyme. Although using glyme is disadvantageous in the electrical conductivity, it has the advantage that the environmental load at the time of electrolyte leakage is small and recycling costs can be reduced.

### [Preparation of Electrolyte Layer]

Between the cathode 107 and the anode 108, the electrolyte layer made of a semi-solid electrolyte (hereinafter referred to as semi-solid electrolyte layer 109) is inserted to enable the giving and receiving of lithium-ions between the electrodes.

The semi-solid electrolyte layer 109 has pores formed by an assembly of inert particles, in which an imide salt and glyme are retained.

The volume fraction of the semi-solid electrolyte layer 109 is 0.33 or more and 0.90 or less. Further, the pore diameter of the semi-solid electrolyte layer 109 is 0.01 µm or more and 0.5 µm or less, and the imide salt and the glyme necessary for the giving and receiving the lithium-ions can be retained to provide a low resistance electrolyte layer.

The volume fraction of inert particles is controlled by the addition amount of inert particles. Similarly, the pore diameter of the semi-solid electrolyte layer 109 can also be made within the scope of the invention by the addition amount of the inert particles.

The pore diameter of the semi-solid electrolyte layer 109 can also be measured using the mercury porosimeter according to the same procedure as for the cathode or the anode. When the semi-solid electrolyte layer 109 is decomposed by the solvent, a scanning electron micrograph of the surface or cross section of the semi-solid electrolyte layer 109 is taken, and the location of the pores is identified based on it. Assuming there are circles tangent to an inner wall of the pore, and the diameter of the circle is determined as the pore diameter. The average value of the diameters of the circles can be made the pore diameter of the semi-solid electrolyte layer 109 by image processing.

The inert particles of the invention are suitably one type or a mixture selected from SiO₂, Al₂O₃, AlOOH, TiO₂, ZrO₂, CaO, MgO, BaTiO₃, and Li₇La₃Zr₂O₂. In the present Example, Li₇La₃Zr₂O₂ with an average particle diameter of 0.1 µm was used as the inert particles.

When the thickness of the semi-solid electrolyte layer 109 is 1 µm or more and 100 µm or less, and 5 µm or more and 25 µm or less, it is possible to prevent an increase in the resistance of the electrolyte layer, which is suitable for improving the performance of the lithium-ion secondary batteries. This is because when the thickness is 1 µm or less, pinholes can be formed in the semi-solid electrolyte layer 109 and a short circuit between the cathode and the anode is likely to occur, and when the thickness is more than 100 µm, the movement distance of lithium-ions becomes too large, and the resistance required for the movement of the lithium-ions between the cathode and the anode increases.

The semi-solid electrolyte layer 109 may be directly prepared on the cathode 107 or the anode 108. After the semi-solid electrolyte layer 109 is prepared on a support sheet of resin or metal, the semi-solid electrolyte layer 109 may be peeled off from the support sheet and attached to the cathode 107 or the anode 108. By mixing inert particles, imide salt and glyme in a solvent such as 1-methyl-2-pyrrolidone (NMP), applying the slurry to the surface of the cathode or the anode, and removing NMP by drying, the semi-solid electrolyte layer 109 can be obtained. After the semi-solid electrolyte layer 109 is formed, it may be compressed by a roll press or it may be omitted. When a binder such as polyvinylidene fluoride or tetrafluoroethylene is added to the slurry, the mechanical strength of the semi-solid electrolyte layer 109 is increased, which is more suitable. Besides NMP, a lower alcohol such as ethanol or water may be used to disperse the binder.

### [Assembly of Battery]

In the present Example, the cathode 107 and the anode 108 on which the semi-solid electrolyte layer 109 is formed are stacked. In FIG. 1, the semi-solid electrolyte layer 109 may be formed on either surface of the cathode 107 or the anode 108, or may be formed on both surfaces. The semi-solid electrolyte layer 109 functions as a medium for moving lithium-ions between the cathode and the anode while preventing a short circuit between the cathode 107 and the anode 108.

The insulating sheet 113 is inserted between the electrode disposed at an end of the electrode group and the battery container 102, so that the cathode 107 and the anode 108 are prevented from the short circuit through the battery container 102.

An upper portion of a stacked body is electrically connected to the cathode external terminal 104 and the anode external terminal 105 via the cathode lead wire 110 and the anode lead wire 111. The cathode 107 is connected to the cathode external terminal 104 of the lid 103 via the cathode lead wire 110. The anode 108 is connected to the anode external terminal 105 of the lid 103 via the anode lead wire 111. The cathode lead wire 110 and the anode lead wire 111 can have any desired shapes, such as wire shape and plate shape. As long as the material has a structure that can reduce ohmic loss when current flows, and it does not react with the electrolytic solution, the shape and material of the cathode lead wire 110 and the anode lead wire 111 can be desirably selected according to the structure of the battery container 102. The material of the battery container 102 is selected from materials having corrosion resistance to the electrolyte, such as aluminum, stainless steel, and nickel-plated steel.

Thereafter, the lid 103 is brought into close contact with the battery container 102 to seal the entire battery. In the present Example, the lid 103 is attached to the battery container 102 by swaging. As the method of sealing the battery, the well-known techniques such as welding and bonding may be applied.

Although the liquid injection port 106 is used when the electrolyte is added to the cathode 107 or the anode 108, when the electrolyte is previously retained by the electrode, the liquid injection port 106 may be eliminated because it is unnecessary.

The nominal capacity (calculated value) of the battery manufactured as an Example is 3 Ah.

### [Example]

FIG. 2 illustrates the electrode specifications of the invention. Examples 1 to 8 are examples in which the invention is applied to the cathode. In Examples 1 to 3, nanofibers made of carboxymethyl cellulose (CMC) were added to the cathode. The fiber diameter was 0.1 µm and the fiber length was 5 µm. The addition amount of nanofibers was varied from 3 wt% to 13 wt%. The average pore diameter of the prepared cathode was measured using the mercury porosimeter, and was in the range of 0.4 µm to 0.05 µm.

Examples 4 to 6 are examples in which CMC is changed to nanofibers of acetyl cellulose (cellulose acetate, abbreviated as ACC). The acetylation degree of the ACC was 55. The addition amount of nanofibers was varied from 3 wt% to 13 wt%. The average pore diameter of the prepared cathode was in the range of 0.4 µm to 0.05 µm.

Carboxymethyl cellulose is an example of the cellulose obtained by alkylating the hydroxyl group of the unsubstituted cellulose-based nanofibers, and cellulose acetate is an example of the cellulose obtained by acetylating the hydroxyl group.

Examples 7 and 8 are the results when a part of a nanofiber is changed to a carbon nanotube (CNT). CNTs are powders with a multi-layer structure diameter of 40 nm to 60 nm. Examples 9 to 12 are examples in which the invention is applied to a graphite anode, and the CMC of Example 1 or the ACC of Example 4 is used for the nanofibers.

In the case of Examples 1 to 12, the retention amount of electrolytic solution was measured as follows: immersing the electrode for 30 minutes or more in an equimolar electrolytic solution of LiTFSI and tetraglyme, and then pulling up the electrode, and wiping the surface with a Kimwipe. When the retention amount of the electrolyte was calculated from the weight increase of the electrode, it was within ± 5% of the value calculated from the volume of the pore. Even when the electrode in which the electrolytic solution was retained was left at room temperature, the weight loss was 5% or less without evaporation of the tetraglyme, and the electrolytic solution was hardly lost. From this result, it was found that there was no liquid leakage of electrolyte from electrode pores. The electrode of the present Example is inserted between two sheets of medicine packaging paper and a polyethylene porous separator and pressurized. The pressing force was made to be 3 MPa per unit area of the electrode. Since the weight of the medicine packaging paper and the polyethylene porous separator did not change, it was possible to confirm that there was no liquid leakage.

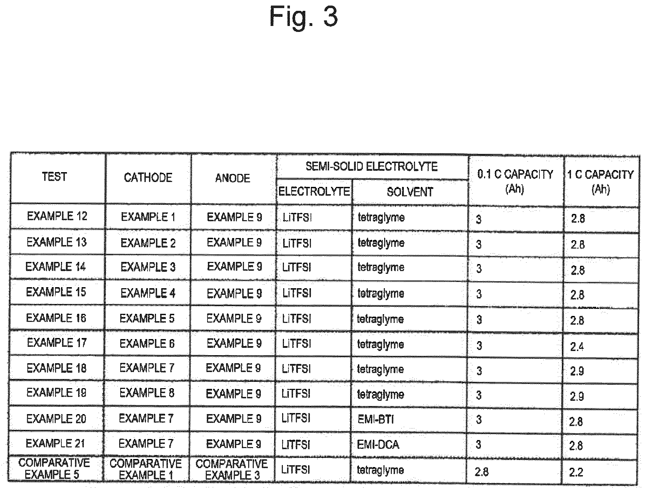

Next, using the cathode and the anode shown in FIG. 2 and the combination described in FIG. 3, the lithium-ion batteries with the specifications of Examples 12 to 21 were prepared. The capacity of the battery was 3 Ah, and the structure of the prepared battery is shown in FIG. 1. A semi-solid electrolyte is an electrolyte in which an electrolytic solution in which a lithium salt is dissolved in an organic solvent or an ionic liquid is retained by an electrode or an electrolyte layer made of porous particles to prevent exudation of the electrolytic solution. The semi-solid electrolyte was mixed with 0.1 µm of SiO₂ powder in the composition shown in FIG. 3 to prepare a semi-solid electrolyte. The ratio of the weight of the electrolyte to the weight of SiO₂ was 40:60. PVDF was used as a binder, and the thickness of the semi-solid electrolyte was 20 µm.

The result of measuring a discharge capacity by charge and discharge of 0.1 C for a design capacity 3 Ah of the battery is shown in the column of "0.1 C capacity" of FIG. 3. A current was 0.3 A, and it was charged with a constant current of 0.3 A so as to reach 4.2 V. After reaching 4.2 V, it was charge with a constant voltage of 4.2 V so as to reach 0.03 A. Thereafter, the battery was discharged with a constant current of 0.3 A until the battery voltage reached 2.8 V, and the obtained discharge capacity was made to be "0.1 C capacity". Under this condition, it is preferable to obtain the design capacity because of the low rate. In Examples 12 to 21, the design capacity of 3 Ah is obtained. As described above, when the suitable average pore diameter is 0.05 µm or more and 0.5 µm or less, the liquid leakage can be prevented. Further, from the results of Examples 7, 8 and 9 used in Examples 18 and 19, 0.1 µm or more and 0.5 µm are more advantageous for increasing the capacity of the battery.

The constant current value was increased to 3 A to obtain a capacity at the time of 1 C discharge. The results are shown in the "1 C capacity" column of FIG. 3. In any of the batteries of Examples 12 to 21, a capacity close to the design capacity of 3 Ah was obtained, in particular, in a battery (Examples 18 and 19) incorporating a cathode with a high electrical conductivity of FIG. 2, a large 1 C capacity was obtained.

### [Comparative Example]

Comparative Examples 1 and 2 are the results of the cathode. The Comparative Example 1 is an example which did not use a nanofiber. There was an exudation of the electrolyte in the above liquid leakage test. In Comparative Example 2, although nanofibers were used, the amount was so low that there was an exudation of the electrolyte. The method of the electrolyte leakage test is as described above, and the cathode used in the Comparative Example is inserted between two sheets of medicine packaging paper or a polyethylene porous separator and pressurized. The pressing force was made to be 3 MPa per unit area of the cathode. The weight of the medicine packaging paper and the polyethylene porous separator increased, and the values were also 40% (Comparative Example 1) and 15% (Comparative Example 2) of the initial retention amount of the electrolytic solution. From this result, it was confirmed that there was a liquid leakage from the cathodes of Comparative Examples 1 and 2.

Comparative Examples 3 and 4 are the results of the anode. The Comparative Example 1 is an example which did not use a nanofiber. There was an exudation of the electrolyte in the above liquid leakage test. The exudation amount was 35% (Comparative Example 3) and 10% (Comparative Example 4) of the initial amount of electrolytic solution. In Comparative Example 2, although nanofibers were used, the amount was so low that there was an exudation of the electrolyte. The measurement method is the same as described above.

In Comparative Example 5 of FIG. 3, the lithium-ion secondary battery of FIG. 1 using the electrodes (Comparative Examples 1 and 3) of the Comparative Example of FIG. 2 and the semi-solid electrolyte of Example 12 was prepared for the semi-solid electrolyte, and the results of the charge and discharge test are shown. Although the 0.1 C capacity was a value close to the rated capacity 3 Ah, the 1 C capacity was much lower than the results of Examples 12 to 21. It is considered that the retention power of the electrolyte of the electrode of Comparative Example 1 or Comparative Example 3 is reduced.

### Reference Sign List

- 101:: lithium-ion secondary battery
- 102:: battery container
- 103:: lid
- 104:: cathode external terminal
- 105:: anode external terminal
- 106:: liquid injection port
- 107:: cathode
- 108:: anode
- 109:: semi-solid electrolyte layer
- 110:: cathode lead wire
- 111:: anode lead wire
- 112:: insulating seal material
- 113:: insulating sheet

## Claims

1. An electrode for a lithium-ion secondary battery including an electrode active material and a semi-solid electrolyte, wherein
the semi-solid electrolyte includes an organic solvent or an ionic liquid, and a lithium salt,
the electrode for the lithium-ion secondary battery comprising a nanofiber, wherein
the nanofiber is a cellulose-based or polyacrylate-based resin;
the nanofiber has a wire diameter of 0.01 µm or more and 1 µm or less; and
an average value of a pore diameter of an electrode mixture layer obtained by removing the ionic liquid and the lithium salt from the electrode for the lithium-ion secondary battery measured by a mercury porosimeter is 0.001 µm or more and 0.5 µm or less.

2. The electrode for the lithium-ion secondary battery according to claim 1, wherein
the nanofiber is the cellulose-based resin; and
the nanofiber is a cellulose fiber whose hydroxyl group is alkylated or cellulose acetate.

3. The electrode for the lithium-ion secondary battery according to claim 1, wherein
the electrode for the lithium-ion secondary battery comprises a carbon fiber; and
a weight composition of the carbon fiber is 1 wt% or more and 90 wt% or less with respect to a weight of the nanofiber and the carbon fiber.

4. The lithium-ion secondary battery comprising the electrode for the lithium-ion secondary battery according to claim 1.
